Europäisches Patentamt

(19) European Patent Office

Office européen des brevets

(11) **EP 0 708 680 B1**

(12) **EUROPEAN PATENT SPECIFICATION**

(45) Date of publication and mention
of the grant of the patent:
**23.09.1998 Bulletin 1998/39**

(21) Application number: **94917854.5**

(22) Date of filing: **25.05.1994**

(51) Int. Cl.$^6$: **B01D 53/34**, B01D 53/50,
C01F 11/46

(86) International application number:
**PCT/SE94/00489**

(87) International publication number:
**WO 94/29003 (22.12.1994 Gazette 1994/28)**

(54) **OXIDATION PROCESS**

OXYDATIONSVERFAHREN

PROCEDE D'OXYDATION

(84) Designated Contracting States:
**AT BE DE ES FR GB IT NL**

(30) Priority: **03.06.1993 SE 9301890**

(43) Date of publication of application:
**01.05.1996 Bulletin 1996/18**

(73) Proprietor: **ABB FLÄKT AB**
**S-120 86 Stockholm (SE)**

(72) Inventor: **BRINGFORS, Nils**
**S-352 41 Växjö (SE)**

(74) Representative: **Wiklund, Erik**
**AWAPATENT AB,**
**Box 5117**
**200 71 Malmö (SE)**

(56) References cited:
**EP-A- 0 162 536**          **DE-A- 3 334 196**
**DE-C- 3 410 109**

Printed by Xerox (UK) Business Services
2.16.3/3.4

## Description

This invention relates to a process for oxidising a sulphite-ion-containing and/or hydrogen-sulphite-ion-containing aqueous solution in the presence of lime, preferably in wet flue-gas desulphurisation. Such processes are for example described in EP-A-0162536 and in DE-A-3410109.

Sulphur dioxide is formed, for instance, when burning material containing sulphur or sulphur compounds, such as coal, oil and refuse which contains rubber and kitchen scraps. As used herein, the term "sulphur dioxide" also encompasses any sulphur trioxide that may be present.

Gases containing sulphur dioxide, such as flue gases resulting from the burning of coal, have to be cleaned in order not to pollute the environment. This is done with the aid of wet flue-gas desulphurisation, in which the gases are washed in a gas washer or scrubber, where an aqueous washing liquid is divided into droplets and contacted with the gas to be cleaned, such that the sulphur dioxide is absorbed by the washing liquid. When thus absorbed, the sulphur dioxide will be present as sulphurous acid ($H_2SO_3$), hydrogen sulphite ions ($HSO_3^-$) and/or sulphite ions ($SO_3^{2-}$), the relative proportions thereof depending on the pH at the absorption. At a pH below about 2, the absorbed sulphur dioxide is present chiefly as sulphurous acid; at a pH of from about 2 to about 7, the absorbed sulphur dioxide is present chiefly as hydrogen sulphite ions; and at a pH above about 7, the absorbed sulphur dioxide is present chiefly as sulphite ions. The aqueous absorption liquid also contains an absorbent, which in the invention consists of lime. By "lime" is here meant calcium carbonate ($CaCO_3$) or slaked lime ($Ca(OH)_2$). Calcium carbonate (limestone) is preferred in actual practice, among other things for reasons of economy. To have optimum effect, the lime should be in the form of a powder of minimal particle size. The admixture of the lime absorbent with the aqueous absorption liquid will result in a slurry containing calcium ions, which may form sparingly-soluble calcium sulphite with the sulphite ions present. This is undesirable, calcium sulphite being neither a chemically stable product nor a useful end product. Instead, the aimed-at end product is gypsum, i.e. calcium sulphate ($CaSO_4$). To obtain this aimed-at end product, any sulphite ions or hydrogen sulphite ions present in the solution have to be oxidised to sulphate ions.

In the prior art, sulphite or hydrogen sulphite is oxidised to sulphate by dispersing air in the absorption liquid. This can be done in many ways.

In modern conventional techniques, the absorption liquid as a whole is first oxidised, and fresh calcium carbonate slurry is then added. The purpose of performing the oxidation before the addition of calcium carbonate is to avoid the precipitation of calcium sulphite. The pH of the absorption liquid decreases on the absorption of sulphur dioxide, to decrease even further when the sulphite is oxidised to sulphate. The thus-obtained low pH level has the disadvantage of entailing a low rate of the oxidation of sulphite ions to sulphate ions, the oxidation rate decreasing as the pH is reduced. Furthermore, the low pH value promotes the hydrogen sulphite ions at the expense of the sulphite ions, which also has a negative effect on the rate of oxidation of the sulphite ions.

In another known variant of sulphite oxidation, the same volume of liquid is used for the oxidation and the pH adjustment. Thus, absorption liquid is collected at the bottom of the scrubber, and lime (limestone) is added to the liquid while blowing air into it. This variant is disadvantageous in that a considerable volume of liquid is required at the bottom of the scrubber tower in order to attain a satisfactory degree of oxidation, i.e. conversion of sulphite to sulphate. If the volume of liquid is too small, i.e. the residence time too short, the degree of oxidation becomes unsatisfactory, resulting in the precipitation of calcium sulphite and thus in operational disturbances. Moreover, a considerable volume of liquid is required also for achieving satisfactory dissolution of calcium carbonate and satisfactory crystallisation of gypsum. In practice, liquid volumes of about 1000-2000 $m^3$ are commonly used, liquid volumes of up to 6000 $m^3$ being sometimes used. However, such large volumes of liquid make efficient dispersal of the oxidation air difficult, thereby increasing the risk that some of the sulphite escapes oxidation.

In another prior-art variant of sulphite oxidation in wet flue-gas desulphurisation, lime (calcium carbonate) is first added, whereupon the oxidation is performed. However, sparingly-soluble calcium sulphite is precipitated when the lime is added first. A solid phase, such as precipitated calcium sulphite, is oxidised very slowly, since the oxidation is constrained by the concentration of sulphite ions and/or hydrogen sulphite ions in the solution, i.e. by the rate of dissolution of calcium sulphite, and not by the rate of the oxidation reaction. Efforts have previously been made to obviate this inconvenience by dissolving the precipitated calcium sulphite prior to oxidation by adding sulphuric acid to the solution, thereby to enable subsequent oxidation by air being blown into the solution. This process not only involves an additional step, but also is more expensive owing to the required addition of sulphuric acid. Moreover, the addition of sulphuric acid augments the precipitation of calcium sulphate.

With the aim of obviating, inter alia, the drawbacks of the above process involving an addition of sulphuric acid, DE-A-33 12 388 discloses a technique in which no sulphuric acid is added, but precipitated calcium sulphite is oxidised to calcium sulphate in a special oxidation column at a pH above 6.5 by heating the absorption solution to 60-90° and blowing air into it. It goes without saying that it is energy-consuming and costly to thus heat the absorption solution to a temperature of 60-90°

According to the present invention, it has now been found that it is possible to remedy the drawbacks of the prior art by first adding lime, and then within 1 min after the addition of lime contacting the resulting solution with an oxygen-containing gas before any precipitation of calcium sulphite has occurred.

Thus, the invention provides a process for oxidising a sulphite-ion-containing and/or hydrogen-sulphite-ion-containing aqueous solution in the presence of lime, the solution preferably originating from wet flue-gas desulphurisation, wherein first lime is added to at least a part of the solution, and subsequently this part of the solution is contacted with an oxygen-containing gas within 1 min after the addition of lime in such a way that sulphite ions and hydrogen sulphite ions are oxidised to sulphate ions before any precipitation of calcium sulphite has occurred.

Other distinctive features of the invention appear from the appended claims.

Without preference to any specific theory, it is assumed that the inventive oxidation process functions as follows.

Sulphur dioxide absorbed in an aqueous solution is present chiefly as hydrogen sulphite ions ($HSO_3^-$) at a pH of about 2-7, and chiefly as sulphite ions ($SO_3^{2-}$) at a pH above about 7. Sulphite ions and hydrogen sulphite ions are oxidised to sulphate ions by reacting with dissolved oxygen in accordance with the reaction formulae I and II below.

$$SO_3^{2-} + \tfrac{1}{2}O_2 \rightarrow SO_4^{2-} \tag{I}$$

and

$$HSO_3 + \tfrac{1}{2}O_2 \rightarrow H^+ + SO_4^{2-} \tag{II}$$

The oxidation reactions I and II are catalysed by transition metal ions, e.g. cobalt ions and/or copper ions acting as catalysts in an alkaline solution, while iron ions and manganese ions are the most effective catalysts in an acid solution. The rate of the oxidation reaction I above is affected by the concentration of sulphite ions, but is essentially unaffected by the concentration of oxygen at the low concentrations of sulphite ions prevailing in calcium-based absorption processes. The rate of the reactions I and II increases as the temperature increases, and also increases with the pH value, showing a steep increase when pH exceeds about 5. However, it should be taken into consideration that the solubility of calcium sulphite ($CaSO_3$) decreases as the pH increases. To increase the rate of oxidation by increasing the pH of the solution is thus only possible up to a certain limit in the case of solutions containing calcium ions, since the precipitation of calcium sulphite becomes predominant above a certain pH value. The break point, at which an increase of the pH value no longer results in an increase but in a decrease of the oxidation rate owing to the augmented precipitation of calcium sulphite, occurs at a pH of about 4.5. Since the lime (calcium carbonate) is added, in the invention, to the solution which has absorbed sulphur dioxide and has an acid pH of 3-5, the lime is rapidly dissolved, accompanied by the escape of carbon dioxide and an increase of the pH value of the solution. The increase of the pH value of the solution results in a shift from hydrogen sulphite ions to sulphite ions in the solution. For a brief period of time, the solution is supersaturated with calcium sulphite, i.e. contains plenty of sulphite ions. Since the pH of the solution in addition has been raised to above the critical value 5 by the addition of lime, the rate of oxidation is very high, and essentially all the sulphite ions can thus be oxidised to sulphate ions. However, the oxidation must take place within one minute after the addition of lime, since there is otherwise a risk that the super-saturation with calcium sulphite is precipitated in the form of calcium sulphite crystals. Therefore, the invention is distinguished by the oxidation to sulphate being performed after lime has been added to the solution but before any precipitation of calcium sulphite has occurred. The time elapsing between the addition of lime and the precipitation of calcium sulphite varies depending on temperature, hydrogen sulphite concentration or sulphite concentration, lime concentration, particle size of the lime, agitation of the solution, and so forth. In general, however, calcium sulphite is precipitated within 1 min, unless the oxidation reaction has been carried out by then. Thus, this means that the solution should be contacted with the oxygen-containing gas within 1 min of the addition of lime. However, this lapse of time is often too long to avoid the precipitation of calcium sulphite, and it is thus preferred that the solution is contacted with the oxygen-containing gas within 30 s of the addition of lime, more preferred within 10 s, and most preferred within 5 s. Best of all, the solution is brought into contact with the oxygen-containing gas immediately and within 3 s of the addition of lime.

To facilitate its dissolution, the lime should, as mentioned in the foregoing, be in the form of a powder of minimal particle size, and it is preferred that the average particle size of the lime does not exceed about 100 $\mu$m, and most preferred does not exceed about 30 $\mu$m. As also mentioned before, the term "lime" as used herein is meant to encompass calcium carbonate and slaked lime. According to the invention, the lime preferably consists of calcium carbonate (limestone).

The lime is added to the absorption solution as a powder or, which is preferred, as a concentrated lime slurry.

The amount of lime added depends on the amount of sulphur dioxide absorbed by the absorption solution and should be such that it is equimolar with the amount of sulphur dioxide absorbed or is present in a certain excess, e.g. in a molar excess of up to about 50%. Usually, the lime is added in such an amount that the absorption solution contains about 5-20% by weight of solids.

The temperature in the inventive process is not critical, and the process may be implemented at ambient temperature or, which is preferred, at a slightly elevated temperature. It is especially preferred that the process be implemented at a temperature of about 40-60° C. Normally, such a temperature is obtained automatically when the absorption solution is contacted with the hot flue gases from which sulphur dioxide is absorbed.

The oxygen-containing gas used for performing the oxidation to sulphate may be pure oxygen, but normally consists of air for reasons of practicality and economy. In order to contact the oxygen-containing gas with the absorption solution and perform the oxidation, the oxygen-containing gas is preferably injected into the solution through one or more nozzles. It is then desirable that the oxygen-containing gas be as finely divided as possible in the solution, thereby to optimise the contact between the oxygen-containing gas and the solution and thus facilitate oxidation. In order to create intimate contact between the oxygen-containing gas and the solution, to disperse the lime particles and to obstruct the crystallisation of calcium sulphite, it is further highly advantageous to agitate or stir the solution. The injection of the oxygen-containing gas through nozzles may achieve or contribute to such agitation, but it is, according to the invention, preferred that the solution be agitated also in some other manner, e.g. by means of stirrers, pumps, shaking or vibrations.

It will be appreciated that, from a purely practical point of view, it is difficult when dealing with large volumes of liquid to contact the oxygen-containing gas with the whole solution before calcium sulphite is precipitated. To this end, it is, in accordance with the invention, preferred that merely a part of the solution is treated, such that it is only the volume of liquid that has just absorbed sulphur dioxide in the scrubber that is collected and supplied with lime, followed by oxidation through the injection of air, the solution being vigorously agitated all the while. This is done separately from the subsequent precipitation and sedimentation of calcium sulphate (gypsum). After oxidation, the solution is drawn off to a container where calcium sulphate (gypsum) is precipitated and sedimented. Thus, the reason for it being, according to the invention, preferred to merely treat a minor amount of the total solution at a time is that it may thus be ensured that precisely that part of the solution to which lime has been added is directly contacted with the oxygen-containing gas for oxidation purposes before any precipitation of calcium sulphite has occurred. If the treatment of a larger amount of the total solution can be secured, e.g. by providing a plurality of means for adding lime, injecting the oxygen-containing gas and agitating the solution, there is naturally nothing to prevent that a large amount of the total solution, or even the whole solution, be treated at one time.

In order to further elucidate the invention, a few non-restricting embodiments will now be described with reference to the accompanying drawing.

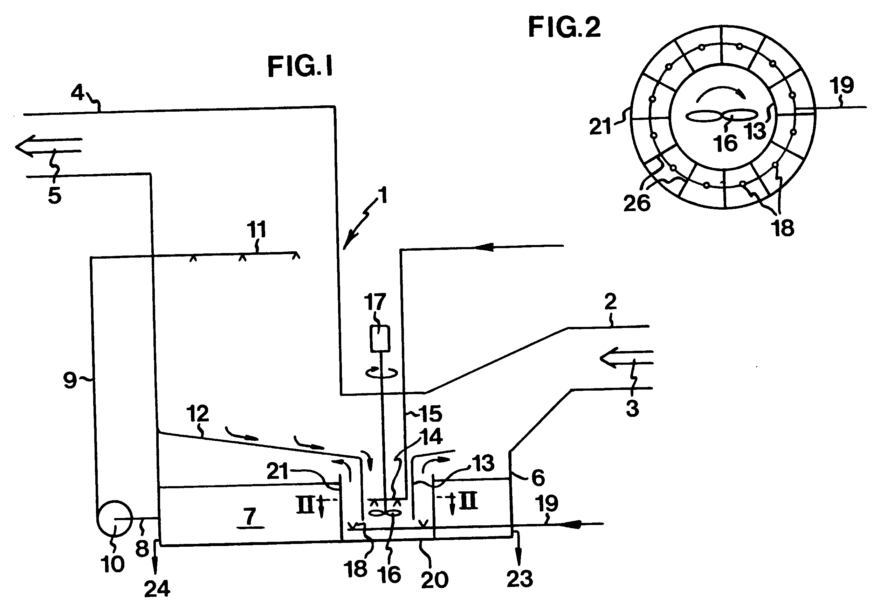

In the drawing, Fig. 1 is a schematic view of a currently preferred device for implementing the inventive process, and Fig. 2 is a partial top view of the device along the line II-II in Fig. 1.

The device illustrated in Fig. 1 consists of a scrubber 1 having an inlet 2 for uncleaned flue gas 3 and an outlet 4 for cleaned flue gas 5. At the bottom of the device, there is provided a collecting container 6 for an aqueous absorption solution 7. There are further provided conduits 8 and 9, as well as a pump 10 for supplying the absorption solution to a plurality of nozzles 11. A collecting baffle 12, which is connected to an upwardly and downwardly open cylinder 13, is arranged inside the device, at the bottom thereof. Inside the cylinder, there are provided nozzles 14 for supplying lime from a conduit 15. A stirrer 16, which is driven by a motor 17, is arranged beneath the nozzles 14. Nozzles 18 for supplying oxidation air from a conduit 19 are provided beneath the stirrer 16. The cylinder 13 is concentrically surrounded by another cylinder 21, which has a bottom 20. The upper edge of the cylinder 21 forms an overflow to the container 6. Precipitated gypsum can be drawn off through conduits 23, 24.

As shown in Fig. 2, the inner cylinder 13 and the outer cylinder 21 are interconnected by a number of vertical walls 26 for producing a good liquid flow in the vertical direction.

The device illustrated in Figs 1 and 2 operates as follows. Uncleaned flue gas 3 is introduced into the device and contacted with the absorption solution 7 injected through the nozzles 11. The absorption solution then absorbs sulphur dioxide from the flue gas, which thereafter leaves through the outlet 4 in the form of cleaned flue gas 5. The absorption solution containing absorbed sulphur dioxide is collected by the baffle 12 and conducted to the cylinder 13, where lime in the form of fine-grained calcium carbonate is injected through the nozzles 14 while the solution is vigorously agitated by means of the stirrer 16. The solution into which lime has been injected is then immediately conducted past the nozzles 18 injecting air into it. Owing to the provision of the baffle 12 and the assembly 13-18, only a part of the absorption solution, namely the part that has just absorbed sulphur dioxide in the scrubber, is treated by lime addition and oxidation. While still being vigorously agitated, the solution which has absorbed sulphur dioxide and into which lime and air have been injected, ascends in the gap between the cylinder 13 and the cylinder 21, and is then fed over the upper edge of the cylinder 21 into the container 6.

As explained in the foregoing, the oxidation of sulphite to sulphate in the absorption solution is very rapid and takes place before any precipitation of calcium sulphite has occurred, owing to the conditions created by treating the absorption solution with air immediately after the addition of lime and preferably implementing the process while the solution is being vigorously agitated and mixed. When the absorption solution enters the container 6, the oxidation is thus essentially completed, and the sulphate ions react with calcium ions to form gypsum, which is precipitated and can be recovered through outlets 23, 24. By the precipitation of gypsum, the absorption solution 7 is regenerated and freed of absorbed sulphur dioxide and may then again be used for absorbing sulphur dioxide from flue gases by being recycled to the nozzles 11 by means of the pump 10.

The device illustrated in Figs 1 and 2 have but a single stirrer and only one or a few nozzles for supplying lime and air. As a result, the illustrated device only treats a part of the total absorption solution on one and the same occasion, namely the part injected through the nozzles 11. However, it is to be understood that, instead of a single device for supplying lime and air and agitating the solution, provision can be made of two or more such devices in the container 6 for treating the part of the solution injected through the nozzles 11. Also, it will be appreciated that the volume of liquid treated can be extended to include more than the part injected through the nozzles 11, by the provision of one or more devices for supplying lime and air and agitating the solution in the container 6. Thus, a varying amount of the total volume of liquid can be treated at one time, as one desires, but it is normally sufficient to merely treat the volume of liquid injected through the nozzles 11, as illustrated in the Figure.

Example 1

A test was performed with absorption of sulphur dioxide from a flue gas in a device of the type described above, by adding calcium carbonate to the absorption liquid and then immediately blowing air into the liquid while vigorously agitating it all the while. The calcium carbonate added had a such a particle size that 90% of the particles passed through a sieve having a mesh width of 44 $\mu$m. The air was added in such an amount that the ratio of atomic mole oxygen to mole $SO_2$ was 5:1. The pH value of the absorption slurry was 5.4 in the recirculation tank. By oxidising the absorbed sulphur dioxide to sulphate in accordance with the invention before feeding it to the slurry in the recirculation tank, the resulting end product obtained a degree of oxidation of sulphite to sulphate of 99.8%, i.e. the oxidation was virtually complete. The degree of separation of sulphur dioxide from the flue gas was 85%.

Example 2 (comparative)

It was proceeded as in Example 1, but no lime was added to the sulphur dioxide absorbed in the form of sulphite, nor did any immediate injection of air under vigorous agitation take place, i.e. the device lacked the components 12-21 in Fig. 1. Instead, use was made of a conventional process and a conventional device, and the absorption solution containing absorbed sulphur dioxide was supplied to the recirculation tank. Finely-divided calcium carbonate was added to the slurry in the recirculation tank, and oxidation was performed by means of air blown into the tank. The pH value in the recirculation tank was 5.4 in the test. Such an amount of air was blown into the solution that the ratio of atomic mole oxygen to mole $SO_2$ exceeded 10:1. The test only yielded an end product showing a degree of oxidation of sulphite to sulphate of 65%, and a degree of separation of 81% with respect to $SO_2$, i.e. the results were much poorer than in the present invention.

**Claims**

1. A process for oxidising a sulphite-ion-containing and/or hydrogen-sulphite-ion-containing aqueous solution in the presence of lime ($CaCO_3$ or $Ca(OH)_2$) the solution preferably originating from wet flue-gas desulphurisation, wherein first lime is added to at least part of the solution, and this part of the solution is contacted with an oxygen-containing gas within 1 min after the addition of lime in such a way that sulphite ions and hydrogen sulphite ions are oxidised to sulphate ions before any precipitation of calcium sulphite has occurred.

2. A process as set forth in claim 1, **characterised** by contacting the solution with the oxygen-containing gas within 30 s of the addition of lime.

3. A process as set forth in claim 2, **characterised** by contacting the solution with the oxygen-containing gas within 5 s of the addition of lime.

4. A process as set forth in any one of the preceding claims, **characterised** by adding air as oxygen-containing gas.

5. A process as set forth in any one of the preceding claims, **characterised** by adding, to the solution, lime having an average particle size not exceeding 100 $\mu$m, preferably not exceeding about 30 $\mu$m.

6. A process as set forth in any one of the preceding claims, **characterised** by adding calcium carbonate as lime.

7. A process as set forth in any one of the preceding claims, **characterised** by agitating the solution while the lime is added and the solution is contacted with the oxygen-containing gas.

8. A process as set forth in claim 7, **characterised** by agitating the solution by means of a stirrer.

9. A process as set forth in claim 7 or 8, **characterised** by agitating the solution by blowing the oxygen-containing gas into it.

## Patentansprüche

1. Verfahren zum Oxidieren einer sulfitionenhaltigen und/oder hydrogensulfitionenhaltigen wäßrigen Lösung in Gegenwart von Kalk ($CaCO_3$ oder $Ca(OH)_2$), wobei die Lösung vorzugsweise aus der nassen Rauchgasentschwefelung hervorgeht, wobei zuerst Kalk zu mindestens einem Teil der Lösung zugegeben wird und dieser Teil der Lösung innerhalb von einer Minute nach der Zugabe von Kalk mit einem sauerstoffhaltigen Gas derart in Berührung gebracht wird, daß Sulfitionen und Hydrogensulfitionen zu Sulfationen oxidiert werden, bevor eine Ausfällung von Calciumsulfit stattgefunden hat.

2. Verfahren nach Anspruch 1, **dadurch gekennzeichnet**, daß die Lösung innerhalb von 30 Sekunden seit der Zugabe von Kalk mit dem sauerstoffhaltigen Gas in Berührung gebracht wird.

3. Verfahren nach Anspruch 2, **dadurch gekennzeichnet**, daß die Lösung innerhalb von 5 Sekunden seit der Zugabe von Kalk mit dem sauerstoffhaltigen Gas in Berührung gebracht wird.

4. Verfahren nach einem der vorangehenden Ansprüche, **dadurch gekennzeichnet**, daß Luft als sauerstoffhaltiges Gas zugegeben wird.

5. Verfahren nach einem der vorangehenden Ansprüche, **dadurch gekennzeichnet**, daß Kalk mit einer mittleren Teilchengröße von nicht mehr als 100 $\mu$m, vorzugsweise nicht mehr als ungefähr 30 $\mu$m zu der Lösung zugegeben wird.

6. Verfahren nach einem der vorangehenden Ansprüche, **dadurch gekennzeichnet**, daß Calciumcarbonat als Kalk zugegeben wird.

7. Verfahren nach einem der vorangehenden Ansprüche, **dadurch gekennzeichnet**, daß die Lösung gerührt wird, während der Kalk zugegeben wird und die Lösung mit dem sauerstoffhaltigen Gas in Berührung gebracht wird.

8. Verfahren nach Anspruch 7, **dadurch gekennzeichnet**, daß die Lösung mittels eines Rührers gerührt wird.

9. Verfahren nach Anspruch 7 oder 8, **dadurch gekennzeichnet**, daß die Lösung durch Einblasen des sauerstoffhaltigen Gases in die Lösung gerührt wird.

## Revendications

1. Procédé pour oxyder une solution aqueuse contenant des ions sulfites et/ou contenant des ions hydrogénosulfites en présence de chaux ($CaCO_3$ ou $Ca(OH)_2$), la solution provenant de préférence d'une désulfuration de gaz de fumée humide, où tout d'abord de la chaux est ajoutée à au moins une partie de la solution, et cette partie de la solution est mise en contact avec un gaz contenant de l'oxygène dans la minute suivant l'addition de chaux de manière que les ions sulfites et les ions hydrogénosulfites soient oxydés en ions sulfates avant qu'une quelconque précipitation de sulfite de calcium se soit produite.

2. Procédé selon la revendication 1, caractérisé par la mise en contact de la solution avec le gaz contenant de l'oxygène dans les 30 secondes suivant l'addition de chaux.

3. Procédé selon la revendication 2, caractérisé par la mise en contact de la solution avec le gaz contenant de l'oxygène dans les 5 secondes suivant l'addition de chaux.

4. Procédé selon l'une quelconque des revendications précédentes, caractérisé par l'addition d'air en tant que gaz contenant de l'oxygène.

5. Procédé selon l'une quelconque des revendications précédentes, caractérisé par l'addition, à la solution, d'une chaux ayant une taille moyenne de particules ne dépassant pas 100 $\mu$m, de préférence ne dépassant pas environ 30 µm.

6. Procédé selon l'une quelconque des revendications précédentes, caractérisé par l'addition de carbonate de calcium en tant que chaux.

7. Procédé selon l'une quelconque des revendications précédentes, caractérisé par l'agitation de la solution tandis que la chaux est ajoutée et que la solution est mise en contact avec le gaz contenant de l'oxygène.

8. Procédé selon la revendication 7, caractérisé par l'agitation de la solution au moyen d'un agitateur.

9. Procédé selon la revendication 7 ou 8, caractérisé par l'agitation de la solution par insufflation du gaz contenant de l'oxygène dans la solution.

FIG.2

FIG.I

**EP 0 708 680 B1**